(19) Europäisches Patentamt / European Patent Office / Office européen des brevets

(11) **EP 1 862 655 B1**

(12) **EUROPEAN PATENT SPECIFICATION**

(45) Date of publication and mention
of the grant of the patent:
**06.07.2011  Bulletin 2011/27**

(51) Int Cl.:
*F02C 3/22* *(2006.01)*     *F01D 5/06* *(2006.01)*
*F02C 3/06* *(2006.01)*

(21) Application number: **06425366.9**

(22) Date of filing: **30.05.2006**

(54) **Method of adapting a gas turbine so that it can consume a fuel of low calorific value**

Verfahren zur Modifizierung einer Gasturbine zur Verbrennung von Gasen mit niedrigen Heizwert

Procédé d'adaptation d'une turbine à gaz pour pouvoir consommer un carburant à faible pouvoir calorifique

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**05.12.2007  Bulletin 2007/49**

(73) Proprietor: **ANSALDO ENERGIA S.P.A.**
**16152 Genova (IT)**

(72) Inventors:
• **Rocca, Franco**
 **16122 Genova (IT)**

• **Cecchi, Stefano**
 **17047 Vado Ligure (IT)**
• **Silingardi, Andrea**
 **16146 Genova (IT)**

(74) Representative: **Bongiovanni, Simone et al**
**STUDIO TORTA**
**Via Viotti 9**
**10121 Torino (IT)**

(56) References cited:
**EP-A- 1 375 822     EP-A- 1 528 240**
**EP-A2- 0 915 242     WO-A-93/11351**
**US-A- 2 826 038**

**Description**

The present invention relates to a method for changing a first gas turbine adapted to be fed with a first gas into a second gas turbine adapted to be fed with a second gas.

In particular, the present invention refers to a method for changing a first gas turbine adapted to be fed with a first gas having a first calorific value into a second gas turbine adapted to be fed with a second gas having a second calorific value considerably lower than the calorific value of the first gas. The first gas turbine, which was designed and dimensioned to operate with a high (first) calorific value (approximately 50 MJ/kg), extends along a longitudinal axis and comprises a first axial multistage compressor; a first combustion chamber; and a first turbine. The first gas turbine of the described type has proven to be extremely efficient when fed with a high (first) calorific value gas, while it has proven not as efficient when fed with a low (second) calorific value gas.

Low calorific value gases have recently become the focus of particular interest. Indeed, the current paucity of energy resources has boosted the cost increase of conventional fuels, such as a natural gas and distilled oil. For this reason, today the use of more cost-effective fuels tends to be reconsidered, such as, for example, coal, Orimulsion, heavy oils. In the case in point, low calorific value gases, such as the gases deriving from the gasification of coal, asphalt or by-product gases of steelwork and refinery, processes are being reconsidered. These gases are characterised by a calorific value from 4 to 10 MJ/kg which is considerably lower than the calorific value of 50 MJ/kg of the gases normally used in the first gas turbine, i.e. in the conventional gas turbine.

Up to now, conventional gas turbines, i.e. those designed to be fed with high calorific value gas, have been used also with gases having a calorific value from 10 to 15 MJ/kg.

However, in consideration of market demands, a technology must be developed for allowing the use of fuels with an even lower calorific value (up to 4 MJ/kg), so as to met all the possible requests, both for gasification systems and for systems using refinery or steelwork gases.

In general, from an operative point of view, replacing high calorific value gas with a low calorific value gas in a gas turbine envisages increasing the gas flow rate to the combustion chamber and proportionally reducing the gas flow rate fed by the multistage axial compressor to maintain the turbine flow rate unchanged.

At present, the three techniques indicated below are used to reduce the air flow rate of the multistage axial compressor.

The first technique consists in extracting an air flow rate at the output of the multistage axial compressor equal to the introduced fuel flow, so as to prevent turbine flow rate imbalance. This first technique presents the drawback of considerably decreasing the gas turbine efficiency, also if the extracted flow rate is used again in a subsequent expander.

The second technique consists in choking the air flow rate in the multistage axial compressor by means of adjustable vanes (VIGV: Variable Inlet Guide Vane) arranged at the inlet of the multistage axial compressor.

This second technique may cause compressor pumping problems: indeed, especially in cold climates, the pumping limit curve has narrow margins with respect to the operative curve of the turbine. A further undesired effect of this second technique consists in the worsening of multistage axial compressor efficiency in closed VIGV operating mode.

A third technique that is disclosed in EP 1,528,240 achieves the reduction of the nominal air flow rate by redesigning the multistage axial compressor by varying the radial distance between the rotor and the outer casing, and calls for redesigning all the vanes of the multistage axial compressor.

It is the object of the present invention to provide a method for changing a first gas turbine adapted to be fed with a first gas having a first calorific value into a second gas turbine adapted to be fed with a second gas having a second calorific value considerably lower than the calorific value of the first gas so as to simply and cost-effectively optimise the operation of the second gas turbine.

According to the present invention, a method according to claim 1 is provided for changing a first gas turbine adapted to be fed with a first gas having a first calorific value into a second gas turbine adapted to be fed with a second gas having a second calorific value considerably lower than the first calorific value; the first gas turbine extending along a longitudinal axis and comprising a first combustion chamber; a first turbine; and a first multistage axial compressor having a first rotor comprising a first ring, a last ring and a set of intermediate rings arranged between the first ring and the last ring coupled together by means of frontal toothing coupling; the second gas turbine comprising the first combustion chamber; and the first turbine; the method comprising the step of replacing the first multistage axial compressor with a second multistage axial compressor having a nominal flow rate lower than the nominal flow rate of the first multistage axial compressor; the method being characterised by adapting the first rotor to the second multistage axial compressor by eliminating the first ring and adding two further rings at the last ring; the further rings having an axial length equal to the axial length of the first ring so that the axial length of the second multistage axial compressor is equal to the axial length of the first multistage axial compressor.

According to a preferred embodiment of the invention, the second multistage axial compressor provides, at nominal flow rate, a compression ratio essentially equal to the compression ratio provided, at nominal flow rate, by the first multistage axial compressor.

For a better understanding of the present invention, a preferred embodiment thereof will now be described only by way of non-limitative example, and with reference to the accompanying drawings, in which:

- figure 1 is a schematic view, with parts removed for clarity, of a gas turbine of the known type;
- figure 2 is a schematic view, with parts removed for clarity, of a gas turbine made according to the present invention;
- figure 3 is an operating diagram of the gas turbine in figure 1 in different operating conditions and of the gas turbine in figure 2;
- figure 4 is a cross-sectional view, with parts removed for clarity, of the multistage axial compressor of the gas turbine in figure 1; and
- figure 5 is a sectional view, with parts removed for clarity, of the multistage axial compressor of the gas turbine in figure 2.

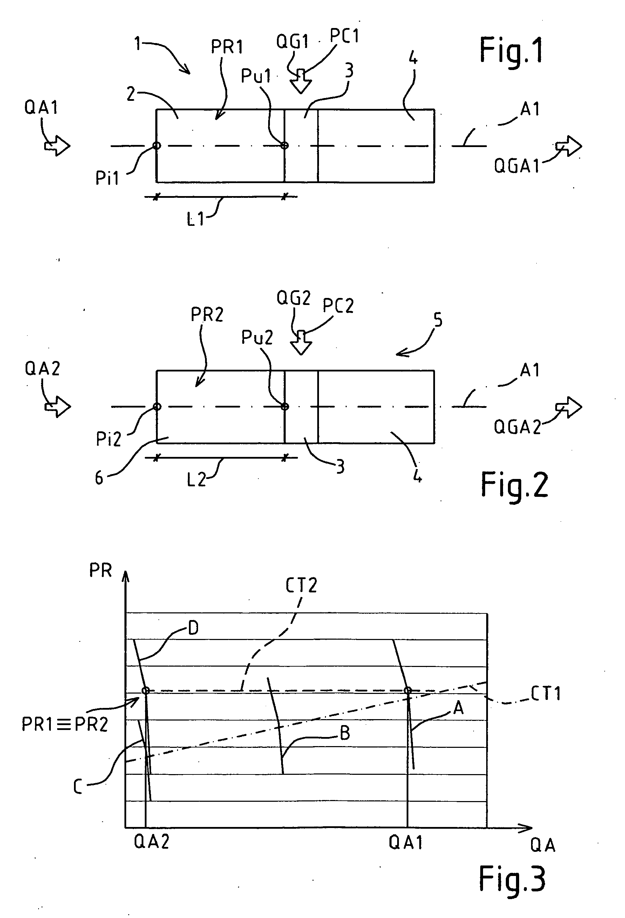

With reference to figure 1, it is indicated as a whole by 1 a gas turbine of the known type extending along an axis AI and arranged to be fed with a high calorific value gas PC1. The gas turbine 1 comprises a multistage axial compressor 2, a combustion chamber 3, and a turbine 4 arranged in sequence and reciprocally connected. At full power, compressor 2 takes in a nominal air flow rate QA1, combustion chamber 3 is fed with a gas flow rate QG1, and turbine 4 exhausts a flow rate of burnt gas, air and possible unburned gas QGA1 which is equal to the sum of QA1 and QG1.

Compressor 2 presents an axial length L1 and compresses nominal air flow rate QA1 between an input pressure Pi1 and an output pressure Pu1 according to a compression ratio PR1=Pu1/Pi1 at nominal air flow rate QA1.

With reference to figure 2, it is indicated as a whole by 5 a gas turbine extending along an axis AI and arranged to be fed with a low calorific value gas PC2. The gas turbine 5 comprises a multistage axial compressor 6, the combustion chamber 3, and the turbine 4 arranged in sequence and reciprocally connected. At full power, compressor 6 takes in a nominal air flow rate QA2, combustion chamber 3 is fed with a gas flow rate QG2, and turbine 4 exhausts a flow rate of burnt gas, air and possible unburned gas QGA2 which is equal to the sum of QA2 and QG2.

Compressor 6 has an axial length L2 equal to axial length L1 of compressor 2 and compresses the nominal air flow rate QA2 between an input pressure Pi2 and an output pressure Pu2 according to a compression ratio PR2=Pu2/Pi2 at nominal air flow rate QA2.

In other words, the difference between gas turbine 1 and gas turbine 5 consists in that compressor 2 has been replaced by a compressor having a lower nominal flow rate, but same axial length. Since the optimal flow rate of turbine 4, common to both gas turbines 1 and 5, is predetermined, it arises that QGA1 and QGA2 are preferably equal.

Gas turbine 5 is arranged to be fed with a gas having a calorific value PC2 from 4 MJ/kg to 15 MJ/kg. Consequently, gas turbine 5 requires a higher gas flow rate QG2 than gas flow rate QG1 fed by a gas turbine 1 of equal dimensions and fed with higher calorific value gas PC1, and a lower air flow rate QA2 than air flow rate QA1 needed by gas turbine 1 of equal dimensions and fed with high calorific value gas. Gas flow rate QG2 is determined by the calorific value of the gas and the flow rate of turbine 4:

$$QG1 + QA1 = QGA1 = QGA2 = QG2 + QA2 ;$$

$$QG2 = QG1*(PC1/PC2) ;$$

and, consequently, the air flow rate is calculated according to equation:

$$QA2 = QGA1 - QG2 = QGA1 - QG1*(PC1/PC2) .$$

Operation with flow rate QA2 would be possible also in gas turbine 1 by choking that is by adjusting the adjustable vanes arranged at the inlet of the multistage axial compressor 2. However, the reduced air flow rate obtained by adjusting the adjustable vanes determines an essential change in the characteristic curve of the compressor 2 with a reduced compression ratio as higher as the air flow rate reduction.

With reference to figure 3, the graph shows air flow rate QA on the abscissa and compression ratio PR on the ordinate and characteristic curves A, B and C of compressor 2 with three different degrees of choking of the air flow rate, i.e. three different degrees of orientation of the vanes. In the case in point, characteristic curve A relates to compressor 2 without flow choking, i.e. at 100% of nominal air flow rate QA1 curve A intersects line CT2 which indicates a constant compression ratio PR1 adapted to make turbine 4 work in optimal conditions. Characteristic curve B refers to a 90% choking with respect to nominal flow rate QA1; and characteristic curve C refers to a 80% choking of nominal flow rate QA1. In essence, flow rate reduction QA in compressor 2 determines a simultaneous reduction of compression ratio PR and, consequently, turbine 4 is fed at a lower pressure than the nominal working pressure of turbine 4. Line CT1 is connected to the centre of curves A, B and C of compressor 2 and indicates how compression ratio PR is reduced as choking increases.

Compressor 6 is dimensioned so as to have a characteristic curve D shown in the graph in figure 3: in other words, compressor 2 is dimensioned so as to output a nominal air flow rate QA2 lower than QA1 and a compression ratio PR2 equal to PR1. In this way, air flow rate QA is reduced but compression ratio PR is maintained constant. Line CT2 intersects curve D at a point defined by coordinates QA1 and PR2 = PR1.

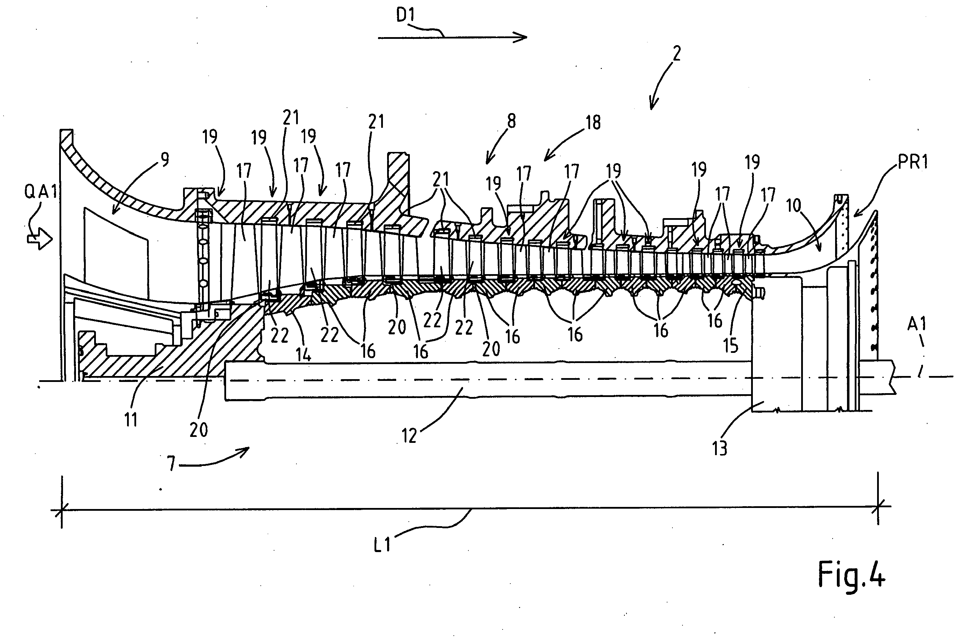

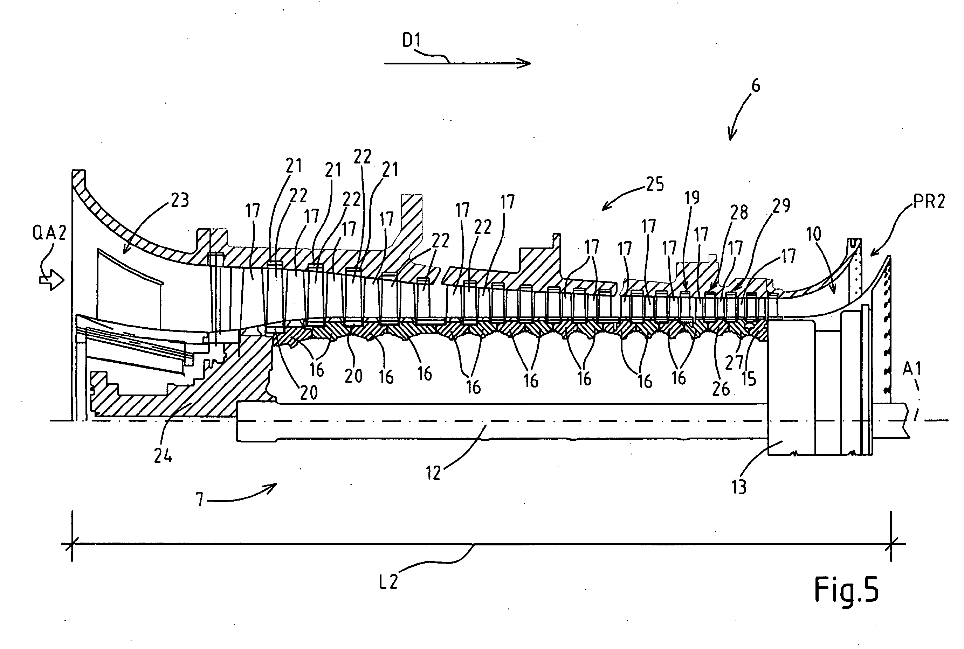

Compressor 2 and compressor 6 will now be illustrated in greater detail with reference to the respective figures 4 and 5.

With reference to figure 4, multistage axial compressor 2 extends along a longitudinal axis Al for an axial length L1 and is adapted to compress an air flow rate QA1 with a certain compression ratio PR1 and to convey air in a direction D1.

Compressor 2 comprises a rotor 7; a vane-holder casing 8; an inlet 9; and an outlet 10.

Rotor 7 comprises a head 11 turnably supported by a bearing (not shown); a plurality of rings arranged in sequence along an axis Al and reciprocally coupled; a tie-rod 12 and a spacer 13. The plurality of rings comprises a first ring 14 adjacent to head 11; a last ring 15 adjacent to spacer 13; and a group of intermediate rings 16 arranged in sequence between first ring 14 and last ring 15. First ring 14, intermediate rings 16 and last ring 15 are pressed between head 11 and spacer 13 by means of tie-rod 12. Each ring between first ring 14, last ring 15 and intermediate rings 16, supports radial vanes 17, which are uniformly distributed about axis Al to form a crown about a corresponding ring. Each intermediate ring 16 is coupled to an intermediate ring 16 adjacent either to first ring 14 or last ring 15 by means of a frontal tooth coupling of the Hirth type.

The vane-holder casing 8 comprises a wall 18 having an essentially tapered pattern, which is divided into three consecutive sections and is supported by an external casing (not shown in figure 4). Wall 18 is fixed to inlet 9 and outlet 10. Compressor 2 comprises fixed annular stages 19, each of which comprises an inner ring 20 turnably supported by rotor 7; an outer ring 21 accommodated in a cavity made in wall 18 and a plurality of vanes 22, which are uniformly distributed about axis Al and extend radially between inner ring 20 and outer ring 21. Each fixed stage 19, except for fixed stage 19 next to inlet 9, is interposed between two rings 14, 15, 16 adjacent to rotor 7.

Vanes 17 and vanes 22 present a progressively decreasing radial extension in direction D1 between inlet 9 and outlet 10.

The definition of stage refers to an assembly comprising a fixed stage 19 followed by a ring 14 or 15 or 16 having a crown of vanes 17. In the case in point in figure 4, compressor 2 is a sixteen-stage axial compressor and presents in total an axial length L1 between inlet 9 and outlet 10.

With reference to figure 5, multistage axial compressor 6 has seventeen stages and is adapted to press an air flow rate QA2 lower than QA1 with a compression ratio PR2 equal to PR1, and whose axial length L2 is equal to the axial length L1 of compressor 2. Furthermore, compressor 6 is made by changing compressor 2 and maintaining many constructive elements of compressor 2 essentially unchanged. The changes made to compressor 2 in order to obtain compressor 6 are as follows:

- replacement of inlet 9 with inlet 23, whose passage section is smaller than the passage section of inlet 9;
- replacement of head 11 with head 24, which has a larger radius than head 11 at the contact point with adjacent ring 16;
- replacement of vane-holder casing 8 with vane-holder casing 25;
- change of rotor 7 by eliminating the first ring 13 and adding two further rings 26 and 27;
- elimination of the first fixed stage 19;
- addition of two further fixed stages 28 and 29 at outlet 10.

The changes envisage to maintain most of the constructive elements of compressor 2. In the case in point, compressor 6 comprises outlet 10, tie-rod 12, spacer 13, last ring 15 with respective vanes 17, and intermediate rings 16 with respective vanes 17; the fixed stages 19 except for the last fixed stage 19 used by compressor 2. The change consists in shifting intermediate rings 26 towards head 24 and adding further rings 26 and 27 directly upstream of the last ring 15.

In the same way, fixed stages 19, except for fixed stage 19 adjacent to inlet 9 which is eliminated, are repositioned towards the new head 24 and two further fixed stages 28 and 29 are added at respective further rings 26 and 27.

Further ring 26 and further fixed stage 28 form a further stage; and similarly, further ring 27 and further fixed stage 29 form a further stage. The two further stages would not be theoretically necessary to determine the operating features of compressor 2, but are however inserted to maintain axial length L2 of compressor 6 equal to axial length L1 of compressor 2. In particular, the two further rings 26 and 27 present in total an axial length equal to the axial length of first ring 14. In this way, the length of changed rotor 7 remains equal to the length of rotor 7.

Maintaining the same axial length L2 equal to axial length L1 is extremely advantageous because it allows to employ the same foundations (not shown) of compressor 2, the same external casing (not shown) of compressor 2 with considerable savings both for changing an installed gas turbine 1 into a gas turbine 5 adapted to run on low calorific value gas, and for making a new gas turbine 5 adapted to work with a low calorific value gas.

Furthermore, the fact of inserting further rings 26 and 27, equal to each other and to ring 15, and further fixed stages 28 and 29, equal to each other and to fixed stage 19 adjacent to last ring 15, allows to reach economies of scale.

## Claims

1.  A method for changing a first gas turbine (1) adapted to be fed with a first gas having a first calorific value (PC1) into a second gas turbine (5) adapted to be fed with a second gas having a second calorific value (PC2) considerably lower than the first calorific value (PC1); the first gas turbine (1) extending along a longitudinal axis (A1) and comprising a first combustion chamber (3); a first turbine (4); and a first multistage axial compressor (2) having a first rotor (7) comprising a first ring (14), a last ring (15) and a set of intermediate rings (16) arranged between the first ring (14) and the last ring (15) coupled together by means of frontal toothing coupling; the second gas turbine (5) comprising the first combustion chamber (3); and the first turbine (4); the method comprising the step of replacing the first multistage axial compressor (2) with a second multistage axial compressor (6) having a nominal flow rate (QA2) lower than the nominal flow rate (QA1) of the first multistage axial compressor (2); the method being **characterised by** adapting the first rotor (7) to the second multistage axial compressor (6) by eliminating the first ring (14) and adding two further rings (26, 27) at the last ring (15); the further rings (26, 27) having an axial length equal to the axial length of the first ring (14) so that the axial length (L2) of the second multistage axial compressor (6) is equal to the axial length (L1) of the first multistage axial compressor (2).

2.  A method according to claim 1, **characterised in that** the second multistage axial compressor (6) provides, at nominal flow rate (QA2), a compression ratio (PR2) essentially equal to the compression ratio (PR1) provided, at nominal flow rate (QA1), by the first multistage axial compressor (2).

3.  A method according to claim 1 or 2, wherein the first turbine (4) has a flow rate (QGA1); the method being **characterised in that** the flow rate (QA2) of the second multistage axial compressor (6) is determined by the equation:

$$QA2 = QGA1 - QG1*(PC1/PC2)$$

wherein:

QA2 is the nominal flow rate of the second multistage axial compressor (6);
QGA1 is the nominal flow rate of the first turbine (4);
QG1 is the gas flow rate of the first gas turbine (1);
PC1 is the first calorific value of the first gas; and
PC2 is the second calorific value of the second gas.

4.  A method according to any of the preceding claims, wherein the first multistage axial compressor (2) comprises a first inlet (9); a first outlet (10); the method being **characterised in that** the first inlet (9) is replaced by a second inlet (23) having a smaller passage cross-section than the first inlet (9) and an equal axial length.

5.  A method according to any of the preceding claims, **characterised in that** the first outlet (10) of the first multistage axial compressor (2) is maintained in the second multistage axial compressor (6).

6.  A method according to any one of the foregoing claims, wherein the first multistage axial compressor (2) comprises a plurality of fixed stages (19) ; the method being **characterised in that** the fixed stage (19) adjacent to the inlet (19) is eliminated and two further fixed stages (28, 29) are added.

7. A method according to any of the preceding claims, **characterised in that** the first multistage axial compressor (2) is a sixteen-stage axial compressor having an axial length (L1) and the second multistage axial compressor (6) is a seventeen-stage axial compressor having an axial length (L2) equal to the axial length (L1) of the first multistage axial compressor (2) .

**Patentansprüche**

1. Verfahren zum Ändern einer ersten Gasturbine (1), die ausgelegt ist, mit einem ersten Gas gespeist zu werden, das einen ersten Heizwert (PC1) aufweist, in eine zweite Gasturbine (5), die ausgelegt ist, mit einem zweiten Gas gespeist zu werden, das einen zweiten Heizwert (PC2) aufweist, der erheblich niedriger ist als der erste Heizwert (PC1), wobei sich die erste Gasturbine (1) entlang einer longitudinalen Achse (A1) erstreckt und eine erste Brennkammer (3); eine erste Turbine (4); und einen ersten mehrstufigen axialen Kompressor (2) umfasst, der einen ersten Rotor (7) aufweist, der einen ersten Ring (14), einen letzten Ring (15) und einen Satz Zwischenringe (16) umfasst, die zwischen dem ersten Ring (14) und dem letzten Ring (15) angeordnet sind, die mittels einer stirnseitigen Zahnkupplung miteinander gekoppelt sind; wobei die zweite Gasturbine (5) die erste Brennkammer (3) und die erste Turbine (4) umfasst; wobei das Verfahren Ersetzen des ersten mehrstufigen axialen Kompressors (2) durch einen zweiten mehrstufigen axialen Kompressor (6) umfasst, der einen Nenndurchsatz (QA2) aufweist, der niedriger ist als der Nenndurchsatz (QA1) des ersten mehrstufigen axialen Kompressors (2); wobei das Verfahren **gekennzeichnet ist durch** Anpassen des ersten Rotors (7) an den zweiten mehrstufigen axialen Kompressor (6) **durch** Entfernen des ersten Rings (14) und Hinzufügen zweier weiterer Ringe (26, 27) am letzten Ring (15); wobei die weiteren Ringe (26, 27) eine axiale Länge aufweisen, die gleich der axialen Länge des ersten Rings (14) ist, so dass die axiale Länge (L2) des zweiten mehrstufigen axialen Kompressors (6) gleich der axialen Länge (L1) des ersten mehrstufigen axialen Kompressors (2) ist.

2. Verfahren nach Anspruch 1, **dadurch gekennzeichnet, dass** der zweite mehrstufige axiale Kompressor (6) bei Nenndurchsatz (QA2) ein Kompressionsverhältnis (PR2) bereitstellt, das im Wesentlichen gleich dem Kompressionsverhältnis (PR1) ist, das bei Nenndurchsatz (QA1) durch den ersten mehrstufigen axialen Kompressor (2) bereitgestellt wird.

3. Verfahren nach einem der Ansprüche 1 oder 2, bei welchem die erste Turbine (4) einen Durchsatz (QGA1) aufweist; wobei das Verfahren **dadurch gekennzeichnet ist, dass** der Durchsatz (QA2) des zweiten mehrstufigen axialen Kompressors (6) durch die folgende Gleichung bestimmt ist:

$$QA2 = QGA1 - QG1 * (PC1 / PC2)$$

wobei:

QA2 der Nenndurchsatz des zweiten mehrstufigen axialen Kompressors (6) ist;
QGA1 der Nenndurchsatz der ersten Turbine (4) ist;
QG1 der Gasdurchsatz der ersten Gasturbine (1) ist;
PC1 der erste Heizwert des ersten Gases ist; und
PC2 der zweite Heizwert des zweiten Gases ist.

4. Verfahren nach einem der vorstehenden Ansprüche, bei welchem der erste mehrstufige axiale Kompressor (2) einen ersten Einlass (9); einen ersten Auslass (10) umfasst; wobei das Verfahren **dadurch gekennzeichnet ist, dass** der erste Einlass (9) durch einen zweiten Einlass (23) ersetzt wird, der einen kleineren Durchlassquerschnitt aufweist als der erste Einlass (9) und eine gleiche axiale Länge.

5. Verfahren nach einem der vorstehenden Ansprüche, **dadurch gekennzeichnet, dass** der erste Auslass (10) des ersten mehrstufigen axialen Kompressors (2) in dem zweiten mehrstufigen axialen Kompressor (6) gehalten wird.

6. Verfahren nach einem der vorstehenden Ansprüche, bei welchem der erste mehrstufige axiale Kompressor (2) mehrere feste Stufen (19) umfasst, wobei das Verfahren **dadurch gekennzeichnet ist, dass** die feste Stufe (19) in Nähe des Einlasses (19) entfernt wird, und zwei weitere feste Stufen (28, 29) hinzugefügt werden.

7. Verfahren nach einem der vorstehenden Ansprüche, **dadurch gekennzeichnet, dass** der erste mehrstufige axiale Kompressor (2) ein 16-stufiger axialer Kompressor ist, der eine axiale Länge (L1) aufweist, und der zweite mehrstufige axiale Kompressor (6) ein 17-stufiger axialer Kompressor ist, der eine axiale Länge (L2) aufweist, die gleich der axialen Länge (L1) des ersten mehrstufigen axialen Kompressors (2) ist.

**Revendications**

1. Procédé pour changer une première turbine à gaz (1) adaptée pour être alimentée avec un premier gaz ayant une première valeur calorifique (PC1) en une deuxième turbine à gaz (5) adaptée pour être alimentée avec un deuxième gaz ayant une deuxième valeur calorifique (PC2) très inférieure à la première valeur calorifique (PC1) ; la première turbine à gaz (1) s'étendant le long d'un axe longitudinal (AI) et comprenant une première chambre de combustion (3) ; une première turbine (4) ; et un premier compresseur axial (2) à plusieurs étages ayant un premier rotor (7) comprenant un premier anneau (14), un dernier anneau (15) et un ensemble d'anneaux intermédiaires (16) agencés entre le premier anneau (14) et le dernier anneau (15) couplés entre eux au moyen de couplage à denture frontale ; la deuxième turbine à gaz (5) comprenant la première chambre de combustion (3) ; et la première turbine (4) ; le procédé comprenant l'étape qui consiste à remplacer le premier compresseur axial (2) à plusieurs étages par un deuxième compresseur axial (6) à plusieurs étages ayant un débit nominal (QA2) inférieur au débit nominal (QAL1) du premier compresseur axial (2) à plusieurs étages ; le procédé étant **caractérisé par** l'adaptation du premier rotor (7) au deuxième compresseur axial (6) à plusieurs étages en éliminant le premier anneau (14) et en ajoutant deux anneaux supplémentaires (26, 27) au dernier anneau (15) ; les anneaux supplémentaires (26, 27) ayant une longueur axiale égale à la longueur axiale du premier anneau (14) de sorte que la longueur axiale (L2) du deuxième compresseur axial (6) à plusieurs étages soit égale à la longueur axiale (L1) du premier compresseur axial (2) à plusieurs étages.

2. Procédé selon la revendication 1, **caractérisé en ce que** le deuxième compresseur axial (6) à plusieurs étages procure, à un débit nominal (QA2), un taux de compression (PR2) sensiblement égal au taux de compression (PR1), prévu, à un débit nominal (QA1), par le premier compresseur axial (2) à plusieurs étages.

3. Procédé selon la revendication 1 ou 2, dans lequel la première turbine (4) a un débit (QGA1) ; le procédé étant **caractérisé en ce que** le débit (QA2) du deuxième compresseur axial (6) à plusieurs étages est déterminé par l'équation :

$$QA2 = QGA1 - QG1 * (PC1/PC2)$$

dans laquelle :

QA2 est le débit nominal du deuxième compresseur axial (6) à plusieurs étages ;
QGA1 est le débit nominal de la première turbine (4) ;
QG1 est le débit de gaz de la première turbine à gaz (1) ;
PC1 est la première valeur calorifique du premier gaz; et
PC2 est la deuxième valeur calorifique du deuxième gaz.

4. Procédé selon l'une quelconque des revendications précédentes, dans lequel le premier compresseur axial (2) à plusieurs étages comprend une première entrée (9) ; une première sortie (10) ; le procédé étant **caractérisé en ce que** la première entrée (9) est remplacée par une deuxième entrée (23) ayant une section transversale de passage plus petite que la première entrée (9) et une longueur axiale égale.

5. Procédé selon l'une quelconque des revendications précédentes, **caractérisé en ce que** la première sortie (10) du premier compresseur axial (2) à plusieurs étages est maintenue dans le deuxième compresseur axial (6) à plusieurs étages.

6. Procédé selon l'une quelconque des revendications précédentes, dans lequel le premier compresseur axial (2) à plusieurs étages comprend plusieurs étages fixes (19) ; le procédé étant **caractérisé en ce que** l'étage fixe (19) adjacent à l'entrée (19) est éliminé et deux étages fixes supplémentaires (28, 29) sont ajoutés.

**7.** Procédé selon l'une quelconque des revendications précédentes, **caractérisé en ce que** le premier compresseur axial (2) à plusieurs étages est un compresseur axial à seize étages ayant une longueur axiale (L1), et le deuxième compresseur axial (6) à plusieurs étages est un compresseur axial à dix-sept étages ayant une longueur axiale (L2) égale à la longueur axiale (L1) du premier compresseur axial (2) à plusieurs étages.

Fig.1

Fig.2

Fig.3

Fig.4

Fig.5

EP 1 862 655 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1528240 A